# EUROPEAN PATENT APPLICATION

(11) **EP 3 862 890 A2**
(43) Date of publication of application: **11.08.2021**
(21) Application number: 21165608.7
(22) Date of filing: 29.03.2021
(51) Int. Cl.: G06F 16/33, G06F 40/30, G10L 15/22, G10L 15/18

(54) **METHOD AND APPARATUS FOR BACKTRACKING COMMON SCENARIO DIALOG IN MULTI-ROUND DIALOG**

(30) Priority: 22.05.2020 CN 202010440939
(71) Applicant: Beijing Baidu Netcom Science and Technology Co., Ltd., Beijing 100085 (CN)
(72) Inventor: FAN, Lianghuang, Beijing 100085 (CN); LUO, Xuefeng, Beijing 100085 (CN); ZHAO, Xiaojun, Beijing 100085 (CN); HE, Xie, Beijing 100085 (CN); BAI, Changfu, Beijing 100085 (CN)
(74) Representative: Gill Jennings & Every LLP

(57) **Abstract**

The present disclosure provides a method and apparatus for backtracking a common scenario dialog in a multi-round dialog, relates to the field of artificial intelligence technology. A specific implementation scheme includes: determining a service scenario based on a query sentence, in response to receiving the query sentence; entering the service scenario, and entering a first dialog node tree corresponding to the service scenario; storing, for each parameter verification dialog node of the first dialog node tree, if it is determined that a common scenario needs to be entered based on a verification of a related parameter by the each parameter verification dialog node, the each parameter verification dialog node and jumping to the common scenario, and entering a second dialog node tree of the common scenario; collecting user information using the second dialog node tree, and if the user information is collected successfully, determining whether a processing result of the second dialog node tree meets a backtracking condition; and returning to the service scenario based on the stored parameter verification dialog node and continuing to execute other dialog logic processing of the service scenario, if the processing result of the second dialog node tree meets the backtracking condition. This embodiment realizes automatic backtracking of a common scenario dialog in a multi-round dialog, reduces a system threshold, complexity, and operation and maintenance costs, and improves real-time, effectiveness and accuracy.

## Description

### TECHNICAL FIELD

Embodiments of the present disclosure relate to the field of computer technology, in particular to the field of artificial intelligence technology.

### BACKGROUND

With the development of natural language technology, multi-round dialog technology has become more mature and perfect, so that multi-round dialog systems are allowed to be applied in various service scenarios in all walks of life. While improving the efficiency of customer services, the cost of enterprises is greatly reduced.

At present, most of the commercial multi-round dialog systems are implemented based on a slot filling method or an improved version of the slot filling method, have relatively simple dialog abilities, basically complete dialog interaction in accordance with preset processes, and cannot realize simple and fast dialog backtracking in common scenarios.

### SUMMARY

A method, apparatus, device and storage medium for backtracking a common scenario dialog in a multi-round dialog are provided.

According to a first aspect, a method for backtracking a common scenario dialog in a multi-round dialog is provided, and the method includes: determining a service scenario based on a query sentence, in response to receiving the query sentence; entering the service scenario, and entering a first dialog node tree corresponding to the service scenario; storing, for each parameter verification dialog node of the first dialog node tree, if it is determined that a common scenario needs to be entered based on a verification of a related parameter by the each parameter verification dialog node, the each parameter verification dialog node and jumping to the common scenario, and entering a second dialog node tree of the common scenario; collecting user information using the second dialog node tree, and if the user information is collected successfully, determining whether a processing result of the second dialog node tree meets a backtracking condition; and returning to the service scenario based on the stored parameter verification dialog node and continuing to execute other dialog logic processing of the service scenario, if the processing result of the second dialog node tree meets the backtracking condition.

According to a second aspect, an apparatus for backtracking a common scenario dialog in a multi-round dialog is provided, the apparatus includes: a determination unit, configured to determine a service scenario based on a query sentence, in response to receiving the query sentence; an entering unit, configured to enter the service scenario, and enter a first dialog node tree corresponding to the service scenario; a jumping unit, configured to store, for each parameter verification dialog node of the first dialog node tree, if it is determined that a common scenario needs to be entered based on a verification of a related parameter by the each parameter verification dialog node, the each parameter verification dialog node and jump to the common scenario, and enter a second dialog node tree of the common scenario; a collection unit, configured to collect user information using the second dialog node tree, and if the user information is collected successfully, determine whether a processing result of the second dialog node tree meets a backtracking condition; and a backtracking unit, configured to return to the service scenario based on the stored parameter verification dialog node and continue to execute other dialog logic processing of the service scenario, if the processing result of the second dialog node tree meets the backtracking condition.

According to a third aspect, an electronic device is provided, and the device includes: at least one processor; and a memory, communicatively connected to the at least one processor, where the memory stores instructions executable by the at least one processor, and the instructions, when executed by the at least one processor, cause the at least one processor to perform the method according to any one of the first aspect.

According to a fourth aspect, a non-transitory computer readable storage medium storing computer instructions is provided, where the computer instructions cause a computer to perform the method according to any one of the first aspect.

According to a fifth aspect, a computer program is provided, where the compute program, when executed by a computer, causes the computer to perform the method according to any one of the first aspect.

According to the technology of the present disclosure, in a multi-round dialog scenario, automatic backtracking of a common scenario dialog is supported using a dialog node tree, which may greatly reduce redundant configuration in scenarios that require dialog backtracking, and at the same time improve a dialog system scenario coverage. With simple configuration, a dialog may be flexibly and automatically backtracked to an original scenario and a subsequent dialog logic of the original scenario is executed, which greatly reduces the threshold and complexity of multi-round dialog system configuration, and also greatly reduces operation and maintenance costs of the multi-round dialog system configuration. A verified parameter may be shared in a multi-round dialog, reducing a parameter verification process, thereby improving the real-time, effectiveness and accuracy of parameter information required in a common dialog scenario. The solution provided by the present disclosure is not a custom-developed solution based on a certain service scenario, but an abstraction of this type of requirements, which may be migrated to other scenario at zero cost, thereby reducing the construction cost of a multi-round dialog robot that meets such requirements.

It should be understood that the content described in this section is not intended to identify key or important features of the embodiments of the present disclosure, nor is it intended to limit the scope of the present disclosure. Other features of the present disclosure will be easily understood by the following description.

### BRIEF DESCRIPTION OF THE DRAWINGS

The accompanying drawings are used to better understand the present solution and do not constitute a limitation to the present disclosure, in which:
Fig. 1 is an example system architecture diagram in which an embodiment of the present disclosure may be implemented;
Fig. 2 is a flowchart of an embodiment of a method for backtracking a common scenario dialog in a multi-round dialog according to the present disclosure;
Fig. 3 is a schematic diagram of an application scenario of the method for backtracking a common scenario dialog in a multi-round dialog according to the present disclosure;
Fig. 4 is a flowchart of another embodiment of the method for backtracking a common scenario dialog in a multi-round dialog according to the present disclosure;
Fig. 5 is a schematic diagram of another application scenario of the method for backtracking a common scenario dialog in a multi-round dialog according to the present disclosure;
Fig. 6 is a schematic structural diagram of an embodiment of an apparatus for backtracking a common scenario dialog in a multi-round dialog according to the present disclosure; and
Fig. 7 is a block diagram of an electronic device of the method for backtracking a common scenario dialog in a multi-round dialog according to an embodiment of the present disclosure.

### DETAILED DESCRIPTION OF EMBODIMENTS

The following describes example embodiments of the present disclosure with reference to the accompanying drawings, which includes various details of the embodiments of the present disclosure to facilitate understanding, and should be regarded as merely example. Therefore, those of ordinary skill in the art should realize that various changes and modifications may be made to the embodiments described herein without departing from the scope and spirit of the present disclosure. Likewise, for clarity and conciseness, descriptions of well-known functions and structures are omitted in the following description.

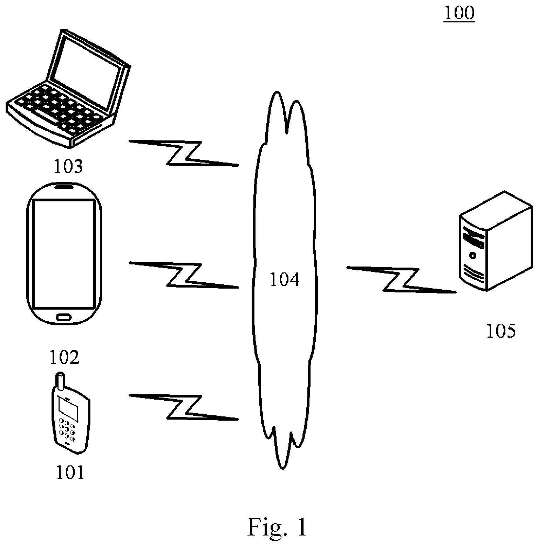

Fig. 1 illustrates an example system architecture 100 of an embodiment of a method for backtracking a common scenario dialog in a multi-round dialog or an apparatus for backtracking a common scenario dialog in a multi-round dialog in which the present disclosure may be implemented.

As shown in Fig. 1, the system architecture 100 may include terminal devices 101, 102, 103, a network 104, and a server 105. The network 104 is used to provide a communication link medium between the terminal devices 101, 102, 103 and the server 105. The network 104 may include various types of connections, such as wired, wireless communication links, or optic fibers.

A user may interact with the server 105 through the network 104 using the terminal devices 101, 102, 103 to receive or send messages and the like. Various communication client applications may be installed on the terminal devices 101, 102, 103, such as human-machine dialog applications, web browser applications, shopping applications, search applications, instant messaging tools, email clients, or social platform software.

The terminal devices 101, 102, and 103 may be hardware or software. When the terminal devices 101, 102, 103 are hardware, the terminal devices 101, 102, 103 may be various electronic devices having a display screen and supporting human-machine dialog, including but not limited to smart phones, tablet computers, E-book readers, MP3 players (Moving Picture Experts Group Audio Layer III), MP4 (Moving Picture Experts Group Audio Layer IV) players, laptop portable computers and desktop computers, etc. When the terminal devices 101, 102, 103 are software, the terminal devices 101, 102, 103 may be installed in the electronic devices listed above. They may be implemented as a plurality of software pieces or software modules (for example, for providing distributed services), or as a single software piece or software module, which is not particularly limited herein.

The server 105 may be a server that provides various services, such as a backend dialog server that provides support for human-machine interaction on the terminal devices 101, 102, and 103. The backend dialog server may perform processing, such as analyzing a received query sentence and other data, and feed back a processing result (such as account balance) to the terminal devices.

It should be noted that the server may be hardware or software. When the server is hardware, the server may be implemented as a distributed server cluster composed of a plurality of servers, or as a single server. When the server is software, the server may be implemented as a plurality of software pieces or software modules (for example, a plurality of software pieces or software modules for providing distributed services), or as a single software piece or software module, which is not particularly limited herein.

It should be noted that the method for backtracking a common scenario dialog in a multi-round dialog provided in the embodiments of the present disclosure is generally performed by the server 105. Accordingly, the apparatus for backtracking a common scenario dialog in a multi-round dialog is generally provided in the server 105.

It should be understood that the number of the terminal devices, the network, and the server in Fig. 1 is merely illustrative. Depending on the implementation needs, there may be any number of terminal devices, networks, and servers.

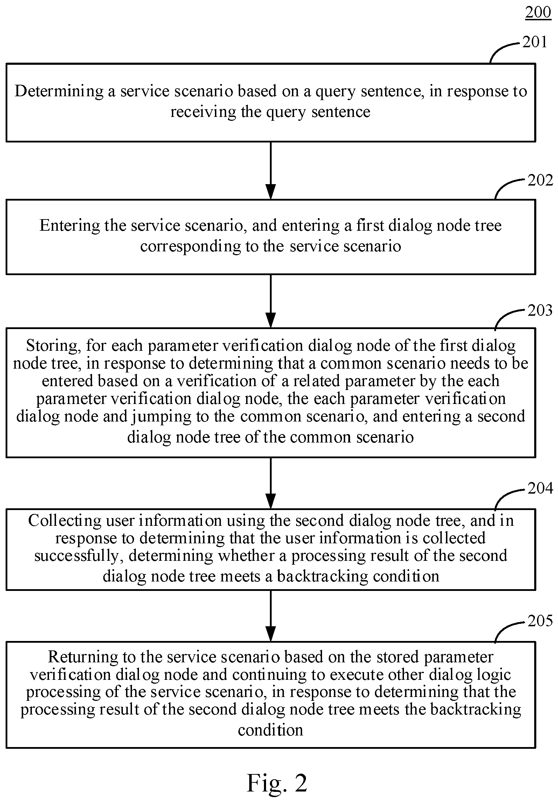

With further reference to Fig. 2, a flow 200 of an embodiment of a method for backtracking a common scenario dialog in a multi-round dialog according to the present disclosure is illustrated. The method for backtracking a common scenario dialog in a multi-round dialog includes the following steps201-205.

Step 201 includes determining a service scenario based on a query sentence, in response to receiving the query sentence.

In the present embodiment, an executing body of the method for backtracking a common scenario dialog in a multi-round dialog (for example, the server as shown in Fig. 1) may receive the query sentence from a terminal that a user uses to conduct human-machine dialog through a wired or wireless connection. The executing body determines the service scenario based on the query sentence.

Before introducing the technical solution, a few concepts are first introduced.

Intention: represents a service action to be completed by the user, such as checking the weather, checking balance, or transferring money, and is similar to a function in code. Intentions may be divided into top-level intentions and sub-intentions. Top-level intention is an intention that may be triggered at any time during a dialog, and sub-intention may only be triggered in a corresponding scenario. Intention recognition may be realized based on solutions such as template matching and text classification.

Dialog node: defines a round of interaction between the user and a robot in a dialog process. The user query sentence may trigger a certain dialog node to process the request and obtain an answer, including entity collection, context inheritance, context change, service system docking, answer generation, etc.

Scenario: an intention and all dialog interaction under the intention (such as collecting entity, clarification, confirmation, or sub-intention) constitute a scenario, and only when the user expresses a new intention or ends the dialog, the scenario switches or ends. The scenario includes two types: service scenario and common scenario. The common scenario refers to a scenario common to all sessions, such as identity verification, or account verification. The service scenario refers to a scenario other than the common scenario.

Session: a series of dialogs between the same user and the robot in a certain period of time is a session, such as a call in telephone customer service.

Dialog: one question and one answer between the user and the robot is a round of dialog.

The method for determining a service scenario based on the query sentence may include the following ways.
1. Semantic analysis is performed on the query sentence to determine whether there is an intention, and the service scenario corresponding to the intention is determined, if there is the intention.
   The intention may be determined through semantic analysis using a pre-trained neural network model. The intention may also be determined by template matching. For example, if the user inputs "how much money is left", it may be recognized that the intention is "check the balance". Then, it is determined that the intention corresponds to a financial service scenario. After determining the intention of the user through semantic analysis and then performing scenario recognition, it is more accurate than just determining the scenario by keyword matching and avoids ambiguity, therefore, this method may improve the accuracy of scenario recognition.
2. A user is guided to input an intention, if there is no intention and a current dialog is not in any scenario; and determining the corresponding service scenario based on the input intention.
   If no intention is recognized from information input by the user, some words may be used to guide the user to input the intention, for example, "what do you want to consult" and giving options. If the user chooses to check the balance, the corresponding financial service scenario is determined. The user may be guided to quickly complete human-machine interaction, so as to avoid the situation that the interaction fails because the user has not input the intention, which improves the success rate of the human-machine interaction.
3. A scenario, in which a current dialog is, is determined as the service scenario, if there is no intention but a current dialog is in the scenario.
   If the intention of the sentence input by the user is not recognized, but the current dialog is already in the scenario, the scenario of the current dialog may be determined as the service scenario. The scenario of the current dialog may be directly used as the service scenario, and a step of querying the intention of the user may be omitted, thereby improving the speed of scenario recognition.

Step 202 includes entering the service scenario, and entering a first dialog node tree corresponding to the service scenario.

In the present embodiment, there are a plurality of dialog nodes in a scenario, forming a dialog node tree. In the present embodiment, in order to distinguish dialog node trees of different scenarios, a dialog node tree corresponding to the service scenario is named as the first dialog node tree. A dialog node tree corresponding to the common scenario is named as a second dialog node tree. Each dialog node has a predetermined processing logic. The user is guided to submit corresponding information for service processing.

In the common scenario, the common scenario may be set to a closed state. The closed state means that when the user expression hits other intention and meets a condition for scenario switching, scenario switching cannot occur, which may ensure that the service scenario may not be switched due to user misoperation, ensure that the service scenario is not interrupted, and ensure the integrity of a service process. Because the scenario in the closed state must focus on a dialog logic of its own scenario, the scenario in the closed state may backtrack the dialog to a previous scenario through a backtracking node in stack space.

Step 203 includes storing, for each parameter verification dialog node of the first dialog node tree, if it is determined that a common scenario needs to be entered based a verification of a related parameter by the parameter verification dialog node, the parameter verification dialog node and jumping to the common scenario, and entering a second dialog node tree of the common scenario.

In the present embodiment, in the dialog nodes, there are dialog nodes that are specially used for parameter verification, and other dialog nodes do not perform parameter verification. The parameter verification dialog node may determine whether to enter the common scenario based on the related verification parameter, for example, when a dialog node needs to perform identity verification, a previous dialog logic processing result is checked, if information indicating that identity is verified is not found, it needs to jump to the common scenario for identity verification. In order to ensure that it can backtrack to the original scenario after identity verification, the current parameter verification dialog node needs to be saved, and then the jumping to the scenario is performed. After entering the common scenario, the second dialog node tree of the common scenario is entered. There is also a plurality of dialog nodes in the common scenario, forming the dialog node tree.

Step 204 includes collecting user information using the second dialog node tree, and if the collection succeeds, determining whether a processing result of the second dialog node tree meets a backtracking condition.

In the present embodiment, a second dialog node is configured with dialog logic for collecting the user information. Each second dialog node may collect one type of user information, and a second dialog node tree collects complete user information. Information that guides the user to input the user information is output, for example, please input ID number, please provide ID photo. Identity verification is performed on the collected information using a third-party interface. If verified, the collection is successful. The collected information may be used for further processing. Then, it is determined whether the processing result meets the backtracking condition. The backtracking condition is configured for the common scenario in advance, for example, the dialog logic of all the dialog nodes in the common scenario is processed, to obtain the result of information being verified, and the like.

If collection fails, re-collection is performed; and the common scenario in which the user information is not successfully collected is exited, if the number of re-collection reaches a predetermined threshold. It may improve the efficiency of human-machine interaction, reduce the failure rate and prevent deadlock. The user may be guided to re-collect information using preset words. If the user is prompted to input the ID number for many times, but the user does not provide, or the provided ID cannot be verified, the common scenario of the collection failure is exited. It prompts that the collection of information fails and the previous service scenario is backtracked.

Step 205 including returning to the service scenario based on the stored parameter verification dialog node and continuing to execute other dialog logic processing of the service scenario, if the processing result of the second dialog node tree meets the backtracking condition.

In the present embodiment, if the backtracking condition is met, it may backtrack to the service scenario before switching to the common scenario. Then, it continues to execute other dialog logic processing of the service scenario. Other dialog logic processing refers to dialog logic processing of dialog nodes other than the parameter verification dialog node.

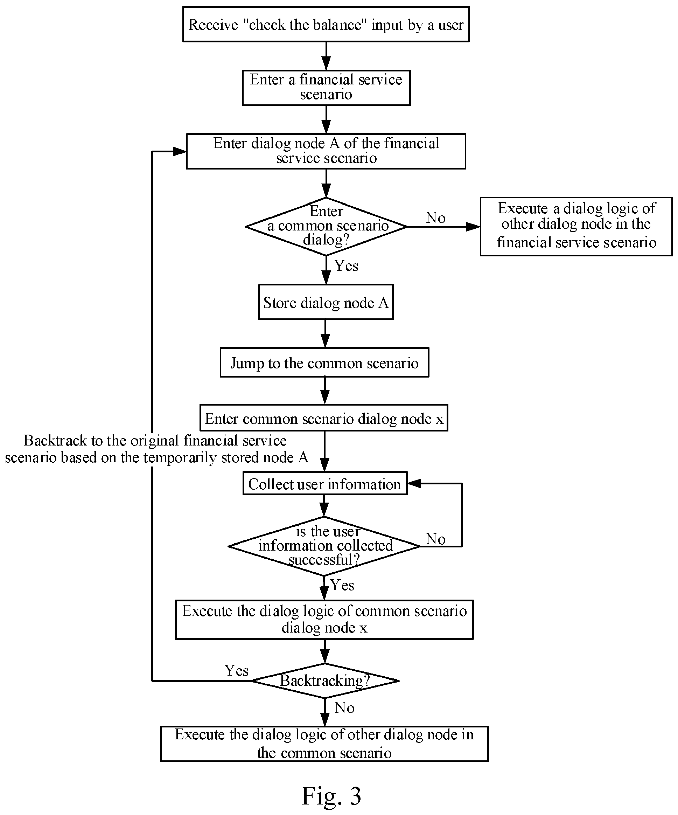

With further reference to Fig. 3, Fig. 3 is a schematic diagram of an application scenario of the method for backtracking a common scenario dialog in a multi-round dialog according to the present embodiment. In the application scenario of Fig. 3, "check the balance" input by a user is received to recognize an intention, and enter a financial service scenario corresponding to the intention. It is determined whether it is necessary to enter a common scenario based on a dialog node and a related verification parameter. If there is no need to enter the common scenario, a dialog logic of other dialog node in the financial service scenario is executed. If it needs to enter the common scenario, dialog node A of the current service scenario is temporarily stored to the stack space, for backtracking to the original service scenario when the common scenario ends. Jumping to the common scenario is performed and a dialog node x of the common scenario is entered. The user is guided and the information is collected, entity recognition and information collection are performed on the sentence input by the user. If user information is not successfully collected, the user is continuously guided the information is continuously collected. If user information is successfully collected, the collected user information is used for logic processing of a common dialog scenario. It is determined whether automatic backtracking to the original service scenario is set. If automatic backtracking to the original service scenario is set, the original service scenario is backtracked based on the temporarily stored node and a common scenario dialog processing result is returned for determining whether to continue to enter the common service scenario. If automatic backtracking to the original service scenario is not set, the dialog logic of other dialog node in the common scenario is continued to be executed. The dialog logic of other dialog node in the original service scenario is executed.

Automatically jumping back to the temporarily stored node may greatly reduce the configuration of the user making the dialog backtracking in the common scenario dialog. According to a normal service logic, in the dialog logic processing of the common scenario, the user may backtrack to the logic processing of the original service at any time, and the automatic backtracking of the dialog may help the user to backtrack the flow of the dialog logic. When the user wants to backtrack to the logic processing of the original service, the user may automatically return to the processing flow of the original service logic.

The method provided by the above embodiment of the present disclosure, in a multi-round dialog scenario, automatic backtracking of a common scenario dialog is supported, which may greatly reduce redundant configuration in scenarios that require dialog backtracking, and at the same time improve a dialog system scenario coverage. With simple configuration, a dialog may be flexibly and automatically backtracked to an original scenario and a subsequent dialog logic of the original scenario is executed, which greatly reduces the threshold and complexity of multi-round dialog system configuration, and also greatly reduces operation and maintenance costs of the multi-round dialog system configuration. At the same time, it also improves the real-time, effectiveness and accuracy of parameter information required in a common dialog scenario. The solution provided by the present disclosure is not a custom-developed solution based on a certain service scenario, but an abstraction of this type of requirements, which may be migrated to other scenario at zero cost, thereby reducing the construction cost of a multi-round dialog robot that meets such requirements.

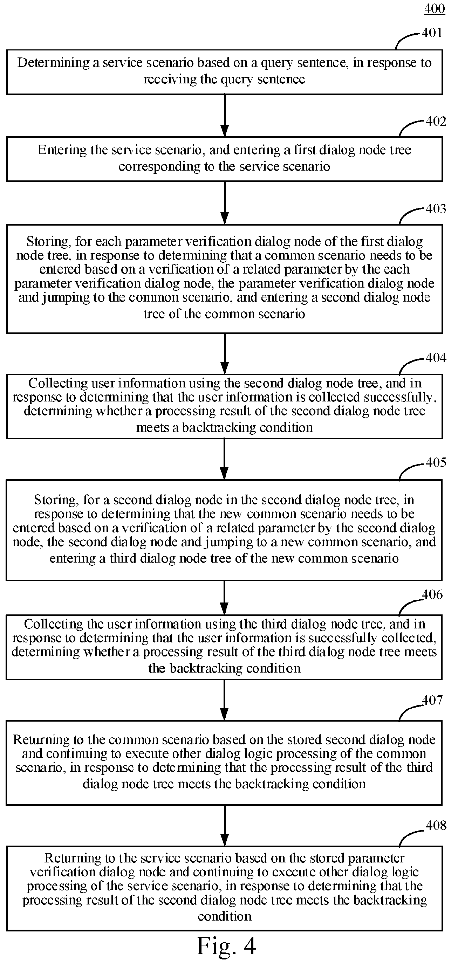

With further reference to Fig. 4, a flow 400 of another embodiment of the method for backtracking a common scenario dialog in a multi-round dialog according to the present disclosure. The method for backtracking a common scenario dialog in a multi-round dialog includes the following steps 401 to 408.

Step 401 includes determining a service scenario based on the query sentence, in response to receiving a query sentence.

Step 402 includes entering the service scenario, and entering a first dialog node tree corresponding to the service scenario.

Step 403 includes storing, for each parameter verification dialog node of the first dialog node tree, if it is determined that a common scenario needs to be entered based on a verification of a related parameter by the parameter verification dialog node, the parameter verification dialog node and jumping to the common scenario, and entering a second dialog node tree of the common scenario.

Step 404 includes collecting user information using the second dialog node tree, and if the collection succeeds, determining whether a processing result of the second dialog node tree meets a backtracking condition.

Steps 401 to 404 are basically the same as steps 201 to 204, therefore detailed description thereof will be omitted.

Step 405 includes storing, for a second dialog node in the second dialog node tree, if it is determined that a new common scenario needs to be entered based on a verification of a related parameter by the second dialog node, the second dialog node and jumping to the new common scenario, and entering a third dialog node tree of the new common scenario.

In the present embodiment, there may also be switching between common scenarios. For example, an operation of checking balance involves not only ID verification, but also bank account verification, which requires entering a new common scenario. Before entering the new common scenario, the second dialog node of the current common scenario is stored, then jumping to the new common scenario is performed, and the third dialog node tree of the new common scenario is entered. The third dialog node tree is used to distinguish the dialog node tree of the original common scenario.

Step 406 includes collecting the user information using the third dialog node tree, and if the collection succeeds, determining whether a processing result of the third dialog node tree meets the backtracking condition.

Step 406 is basically the same as step 204, therefore detailed description thereof will be omitted. It is possible to inherit collected user information from another common scenario where user information has been collected, to make full use of existing resources, and avoid repetitive collection arousing user disgust. For example, if ID card information has been collected and verified, the new common scenario does not need to collect and verify the ID card information again.

Step 407 includes returning to the common scenario based on the stored second dialog node and continuing to execute other dialog logic processing of the common scenario, if the processing result of the third dialog node tree meets the backtracking condition.

Step 407 is basically the same as step 205, the previously stored common scenario is backtracked, and the processing of the common scenario is continued. Here, other dialog logic processing of the common scenario refers to the dialog logic of other dialog node except the third dialog node that has been processed. After the common scenario is processed, the following step is then performed to backtrack to the previous service scenario.

Step 408 includes returning to the service scenario based on the stored parameter verification dialog node and continuing to execute other dialog logic processing of the service scenario, if the processing result of the second dialog node tree meets the backtracking condition.

Step 408 is basically the same as step 205, therefore detailed description thereof will be omitted.

As can be seen from Fig. 4, compared with the embodiment corresponding to Fig. 2, the flow 400 of the method for backtracking a common scenario dialog in a multi-round dialog in the present embodiment reflects the step of backtracking the common scenario. Therefore, the solution described in the present embodiment may perform backtracking of the common scenario.

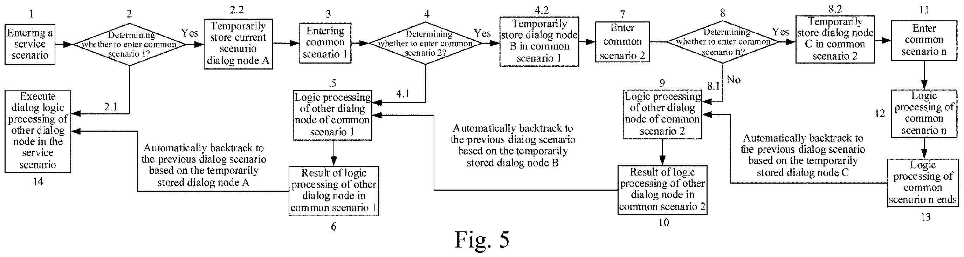

With further reference to Fig. 5, Fig. 5 is a schematic diagram of another application scenario of the method for backtracking a common scenario dialog in a multi-round dialog according to the present embodiment. In the application scenario of Fig. 5, the specific processing flow is as follows.
Step 1 includes entering a service scenario and continuing to perform step 2.
Step 2 includes determining whether to enter common scenario 1:
   2.1 No need to enter common scenario 1, continue to perform step 14.
   2.2 Need to enter common scenario 1, temporarily store current service scenario (the service scenario where a dialog starts) dialog node A, if enter other dialog scenario later, automatically backtrack to the current dialog scenario based on the temporarily stored dialog node, and continue to perform step 3.
Step 3 includes entering common scenario 1, and continuing to perform step 4.
Step 4 includes determining whether to enter common scenario 2:
   4.1 No need to enter common scenario 2, continue to perform step 5.
   4.2 Need to enter common scenario 2, temporarily store current service scenario (common scenario 1) dialog node B, if enter other dialog scenario later, automatically backtrack to the current dialog scenario based on the temporarily stored dialog node, and continue to perform step 7.
5 includes guiding the user to process other logic of common scenario 1, and continuing to perform step 6.
6 includes logic processing of other dialog node in common scenario 1 ending, automatically backtracking to the previous dialog scenario based on the temporarily stored dialog node A, that is, the dialog processing logic of the service scenario where the dialog starts, and continuing to perform step 14.
7 includes entering common scenario 2 and continuing to perform step 8.
8 includes determining whether to enter common scenario n:
   8.1 No need to enter common scenario n, and continue to perform step 9.
   8.2 Need to enter common scenario n, temporarily store current service scenario (common scenario 2) dialog node C, if enter other dialog scenario later, automatically backtrack to the current dialog scenario based on the temporarily stored dialog node, and continue to perform step 11.
9 includes guiding the user to process the dialog logic of other dialog node in common scenario 2, and continuing to perform step 10.
10 includes the logic processing of dialog scenario 2 ending, automatically backtracking to the previous dialog scenario based on the temporarily stored dialog node B, that is, the logic processing of dialog scenario 1, and continuing to perform step 5.
11 includes entering common scenario n, and continuing to perform step 12.
12 includes guiding the user to perform logic processing of common scenario n, and continuing to perform step 13.
13 includes logic processing of dialog scenario n ending, automatically backtracking to the previous dialog scenario based on the temporarily stored dialog node C, that is, the dialog processing logic of common scenario 2, and continuing to perform step 9.
14 includes guiding the user to process other logic of the service scenario where the dialog starts.

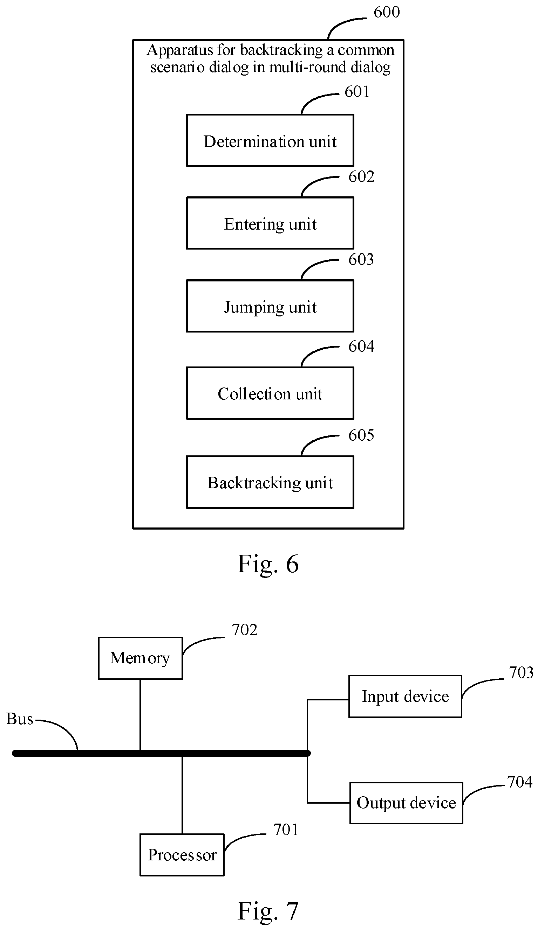

With further reference to Fig. 6, as an implementation of the method shown in the above figures, the present disclosure provides an embodiment of an apparatus for backtracking a common scenario dialog in a multi-round dialog, and the apparatus embodiment corresponds to the method embodiment as shown in Fig. 2. The apparatus may be specifically applied to various electronic devices.

As shown in Fig. 6, an apparatus 600 for backtracking a common scenario dialog in a multi-round dialog of the present embodiment includes: a determination unit 601, an entering unit 602, a jumping unit 603, a collection unit 604 and a backtracking unit 605. The determination unit 601 is configured to determine a service scenario based on the query sentence, in response to receiving a query sentence. The entering unit 602 is configured to enter the service scenario, and enter a first dialog node tree corresponding to the service scenario. The jumping unit 603 is configured to store, for each parameter verification dialog node of the first dialog node tree, if it is determined that a common scenario needs to be entered base on a verification of a related parameter by the parameter verification dialog node, the parameter verification dialog node and jump to the common scenario, and enter a second dialog node tree of the common scenario. The collection unit 604 is configured to collect user information using the second dialog node tree, and if the collection succeeds, determine whether a processing result of the second dialog node tree meets a backtracking condition. The backtracking unit 605 is configured to return to the service scenario based on the stored parameter verification dialog node and continue to execute other dialog logic processing of the service scenario, if the processing result of the second dialog node tree meets the backtracking condition.

In the present embodiment, the specific processing of the determination unit 601, the entering unit 602, the jumping unit 603, the collection unit 604 and the backtracking unit 605 of the apparatus 600 for backtracking a common scenario dialog in a multi-round dialog may refer to step 201, step 202, step 203, step 204, and step 205 in the corresponding embodiment in Fig. 2.

In some alternative implementations of the present embodiment, the jumping unit 603 is further configured to: set the common scenario to a closed state, and prohibit scenario switching from the common scenario, the scenario switching being based on an intention input by a user.

In some alternative implementations of the present embodiment, the determination unit 601 is further configured to: perform semantic analysis on the query sentence to determine whether there is an intention; and determine the service scenario corresponding to the intention, if there is the intention.

In some alternative implementations of the present embodiment, the determination unit 601 is further configured to: guide a user to input the intention, if there is no intention and a current dialog is not in any scenario; and determine the corresponding service scenario based on the input intention.

In some alternative implementations of the present embodiment, the determination unit 601 is further configured to: determine a scenario in which a current dialog is as the service scenario, if there is no intention but the current dialog is in the scenario.

In some alternative implementations of the present embodiment, the collection unit 604 is further configured to: recollect the user information, if the collection fails; and exit a common scenario in which the user information is not successfully collected, if the number of re-collection reaches a predetermined threshold.

In some alternative implementations of the present embodiment, the jumping unit 603 is further configured to: store, for a second dialog node in the second dialog node tree, if it is determined that a new common scenario needs to be entered based on a verification of a related parameter by the second dialog node, the second dialog node and jump to the new common scenario, and enter a third dialog node tree of the new common scenario; and the collection unit 604 is further configured to: collect the user information using the third dialog node tree, and if the collection succeeds, determine whether a processing result of the third dialog node tree meets the backtracking condition; and the backtracking unit 605 is further configured to: return to the common scenario based on the stored second dialog node and continue to execute other dialog logic processing of the common scenario, if the processing result of the third dialog node tree meets the backtracking condition.

In some alternative implementations of the present embodiment, the collection unit 604 is further configured to: inherit the collected user information from another common scenario where the user information has been collected.

According to an embodiment of the present disclosure, the present disclosure also provides an electronic device and a readable storage medium.

As shown in Fig. 7, Fig. 7 is a block diagram of an electronic device of the method for backtracking a common scenario dialog in a multi-round dialog according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile devices, such as personal digital processors, cellular phones, smart phones, wearable devices, and other similar computing devices. The components shown herein, their connections and relationships, and their functions are merely examples, and are not intended to limit the implementation of the present disclosure described and/or claimed herein.

As shown in Fig. 7, the electronic device includes: one or more processors 701, a memory 702, and interfaces for connecting various components, including a high-speed interface and a low-speed interface. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations, for example, as a server array, a set of blade servers, or a multi-processor system. In Fig. 7, one processor 701 is used as an example.

The memory 702 is a non-transitory computer readable storage medium provided by the present disclosure. The memory stores instructions executable by at least one processor, so that the at least one processor performs the method for backtracking a common scenario dialog in a multi-round dialog provided by the present disclosure. The non-transitory computer readable storage medium of the present disclosure stores computer instructions for causing a computer to perform the method for backtracking a common scenario dialog in a multi-round dialog provided by the present disclosure.

The memory 702, as a non-transitory computer readable storage medium, may be used to store non-transitory software programs, non-transitory computer executable programs and modules, such as program instructions/modules corresponding to the method for backtracking a common scenario dialog in a multi-round dialog in the embodiments of the present disclosure (for example, the determination unit 601, the entering unit 602, the jumping unit 603, the collection unit 604 and the backtracking unit 605 as shown in Fig. 6). The processor 701 executes the non-transitory software programs, instructions, and modules stored in the memory 702 to execute various functional applications and data processing of the server, that is, to implement the method for backtracking a common scenario dialog in a multi-round dialog in the foregoing method embodiments.

The memory 702 may include a storage program area and a storage data area, where the storage program area may store an operating system and an application program required by at least one function; and the storage data area may store data created by the electronic device when executing the method for backtracking a common scenario dialog in a multi-round dialog. In addition, the memory 702 may include a high-speed random access memory, and may further include a non-transitory memory, such as at least one magnetic disk storage device, a flash memory or other non-transitory solid state storage devices. In some embodiments, the memory 702 may alternatively include a memory disposed remotely relative to the processor 701, which may be connected through a network to the electronic device adapted to execute the method for backtracking a common scenario dialog in a multi-round dialog. Examples of such networks include, but are not limited to, the Internet, enterprise intranets, local area networks, mobile communication networks and combinations thereof.

The electronic device adapted to execute the method for backtracking a common scenario dialog in a multi-round dialog may further include an input device 703 and an output device 704. The processor 701, the memory 702, the input device 703 and the output device 704 may be interconnected through a bus or other means, and an example of a connection through a bus is shown in Fig. 7.

The input device 703 may receive input digit or character information, and generate key signal input related to user settings and functional control of the electronic device adapted to execute the method for backtracking a common scenario dialog in a multi-round dialog, such as a touch screen, a keypad, a mouse, a track pad, a touch pad, a pointer bar, one or more mouse buttons, a trackball or a joystick. The output device 704 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact through a communication network. The relationship between the client and the server is generated by a computer program running on the corresponding computer and having a client-server relationship with each other.

According to the technical solution of the present disclosure, in a multi-round dialog scenario, automatic backtracking of a common scenario dialog is supported, which may greatly reduce redundant configuration in scenarios that require dialog backtracking, and at the same time improve a dialog system scenario coverage. With simple configuration, a dialog may be flexibly and automatically backtracked to an original scenario and a subsequent dialog logic of the original scenario is executed, which greatly reduces the threshold and complexity of multi-round dialog system configuration, and also greatly reduces operation and maintenance costs of the multi-round dialog system configuration. At the same time, it also improves the real-time, effectiveness and accuracy of parameter information required in a common dialog scenario. The solution provided by the present disclosure is not a custom-developed solution based on a certain service scenario, but an abstraction of this type of requirements, which may be migrated to other scenario at zero cost, thereby reducing the construction cost of a multi-round dialog robot that meets such requirements.

It should be appreciated that the steps of reordering, adding or deleting may be executed using the various forms shown above. For example, the steps described in the present disclosure may be executed in parallel or sequentially or in a different order, so long as the expected results of the technical solutions provided in the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for backtracking a common scenario dialog in a multi-round dialog, the method comprising:
determining (201) a service scenario based on a query sentence, in response to receiving the query sentence;
entering (202) the service scenario, and entering a first dialog node tree corresponding to the service scenario;
storing (203), for each parameter verification dialog node of the first dialog node tree, if it is determined that a common scenario needs to be entered based on a verification of a related parameter by the each parameter verification dialog node, the each parameter verification dialog node and jumping to the common scenario, and entering a second dialog node tree of the common scenario;
collecting (204) user information using the second dialog node tree, and if the user information is collected successfully, determining whether a processing result of the second dialog node tree meets a backtracking condition; and
returning (205) to the service scenario based on the stored parameter verification dialog node and continuing to execute other dialog logic processing of the service scenario, if the processing result of the second dialog node tree meets the backtracking condition.

2. The method according to claim 1, wherein the method further comprises:
setting the common scenario to a closed state, and prohibiting scenario switching from the common scenario, the scenario switching being based on an intention input by a user.

3. The method according to claim 1 or 2, wherein the determining a service scenario based on the query sentence, comprises:
performing semantic analysis on the query sentence to determine whether there is an intention; and
determining the service scenario corresponding to the intention, if there is the intention.

4. The method according to claim 3, wherein the determining a service scenario based on the query sentence, comprises:
guiding a user to input the intention, if there is no intention and a current dialog is not in any scenario; and
determining the corresponding service scenario based on the input intention.

5. The method according to claim 3 or 4, wherein the method further comprises:
determining a scenario in which a current dialog is as the service scenario, if there is no intention but the current dialog is in the scenario.

6. The method according to any one of claims 1 to 5, wherein the method further comprises:
recollecting the user information, if the user information is not successfully collected; and
exiting the common scenario in which the user information is not successfully collected, if a number of re-collection reaches a predetermined threshold.

7. The method according to any one of claims 1-6, wherein the method further comprises:
storing (405), for a second dialog node in the second dialog node tree, if it is determined that the common scenario needs to be entered based on a verification of a related parameter by the second dialog node, the second dialog node and jumping to a new common scenario, and entering a third dialog node tree of the new common scenario;
collecting (406) the user information using the third dialog node tree, and if the user information is successfully collected, determining whether a processing result of the third dialog node tree meets the backtracking condition; and
returning (407) to the common scenario based on the stored second dialog node and continuing to execute other dialog logic processing of the common scenario, if the processing result of the third dialog node tree meets the backtracking condition.

8. The method according to claim 7, wherein the collecting the user information, comprises:
inheriting the collected user information from another common scenario where the user information has been collected.

9. An apparatus for backtracking a common scenario dialog in a multi-round dialog, the apparatus comprising: units for performing the method according to any one of claims 1 to 8.

10. An electronic device, comprising:
at least one processor; and
a memory, communicatively connected to the at least one processor; wherein,
the memory stores instructions executable by the at least one processor, and the instructions, when executed by the at least one processor, cause the at least one processor to perform the method according to any one of claims 1-8.

11. A non-transitory computer readable storage medium, storing computer instructions, the computer instructions, being used to cause the computer to perform the method according to any one of claims 1-8.

12. A computer program comprising instructions which, when the program is executed by a computer, cause the computer to perform the method according to any one of claims 1 to 8.
